# EUROPÄISCHE PATENTANMELDUNG

(11) **EP 0 936 412 A2**
(43) Veröffentlichungstag der Anmeldung: **18.08.1999**
(21) Anmeldenummer: 99102199.9
(22) Anmeldetag: 03.02.1999
(51) Int. Cl.: F24D 3/14

(54) **Festlegung von Rohren auf Wärme- und/oder Trittschalldämmungsuntergründen**

(30) Priorität: 14.02.1998 DE 29802561 U
(71) Anmelder: POLYTHERM VERTRIEBSGESELLSCHAFT HAUSTECHNISCHER ARTIKEL mbH, 48607 Ochtrup (DE)
(72) Erfinder: Frieling, Werner, Dipl.-Ing., 48431 Rheine (DE)
(74) Vertreter: Hilleringmann, Jochen, Dipl.-Ing.

(57) **Zusammenfassung**

Das System zum Festlegen eines Rohres (10) auf einem Wärme- und/oder Trittschalldämmungsuntergrund (40) umfaßt das Rohr (10) und einen Halteclips (16). Das Rohr (10) und der Halteclips (16) weisen an ihren einander berührenden Flächen Strukturen und Beschaffenheiten auf, die es erlauben, zwecks Verhakung beider zur verdrehsicheren Halterung des Halteclips (16) am Rohr (10) zusammen zu wirken. Insbesondere ist das Rohr (10) an seiner Außenschicht (12) mit mehreren Erhebungen (14) versehen, während der Halteclips (16) an seiner Innenseite mehrere korrespondieren Nuten (30) aufweist. Der Halteclips weist abstehende Schenkel (20) auf, mit denen er in den Untergrund (40) hineingetrieben wird.

## Beschreibung

Die Erfindung betrifft ein System zum Festlegen eines Rohres auf einem Wärme- und/oder Trittschalldämmungsuntergrund mit einem Rohr und einem Halteclips. Ferner betrifft die Erfindung ein Rohr und einen Halteclips für ein derartiges System.

Bei der Erstellung einer Flächenheizung und insbesondere einer Fußbodenheizung wird zunächst auf einen Untergrund (Wand oder Rohbetonboden) eine Wärme- und/oder Trittschalldämmschicht aus insbesondere EPS-Material aufgebracht. Auf diese EPS-Schicht wird dann eine Folie fixiert, auf der ein Rohr verlegt wird. Das Rohr wird mittels Halteelementen in Form von U-förmigen krampenartigen Teilen befestigt, die durch die Folie hindurch in die EPS-Schicht getrieben werden und sich in dieser verkrallen. Beispiele für derartige Halteelemente bzw. Halteclipse finden sich in DE 83 06 406 U1, DE 40 09 573 A1, DE 42 12 113 A1, DE 43 10 484 A1, CH 616 488 A5 und CH 646 447 A5.

In gewisser Weise nachteilig bei den bekannten Systemen zur Befestigung eines Rohres mittels eines im wesentlichen U-förmigen Halteclips ist darin zu sehen, daß diese Halteclipse mit Spezialwerkzeugen in die Dämmschicht hineingetrieben werden. Diese Spezialwerkzeuge sind zum Teil relativ teuer, erfordern eine gewisse Übung für den sachgerechten Umgang und können mitunter insbesondere in Folge des rauhen Umgangs und der rauhen Umgebungsbedingungen reparaturanfällig sein.

Der Erfindung liegt die Aufgabe zugrunde, die Verlegung von Rohren auf Wärme- und Trittschalldämmungsuntergrunden mit Hilfe von im wesentlichen U-förmigen Halteclipsen dahingehend zu vereinfachen, daß auf Spezialwerkzeuge verzichtet werden kann.

Zur Lösung dieser Aufgabe wird mit der Erfindung ein Rohr, insbesondere ein Kunststoffrohr oder Kunststoff-Metall-Verbundrohr oder kunststoffbeschichtetes Metallrohr mit
- einer Kunststoffaußenschicht und
- mehreren in Erstreckung des Rohres verlaufenden Nuten oder Erhebungen in bzw. auf der Außenschicht zum Zusammenwirken mit in ihrer Form komplementären Erhebungen oder Nuten an der Innenseite eines zum Festlegen des Rohres auf einem Wärme- und/oder Trittschalldämmungsuntergrundvorgesehenen, im wesentlichen U-förmigen Halteclips, und zwar zwecks Verdrehsicherung desselben,
   sowie ein Halteclips zum Festlegen eines Rohres mit
- einem im wesentlichen U-förmig gebogenen Bügel, der zwei Schenkel und einen dem Außendurchmesser des Rohres entsprechend gekrümmten Bogenabschnitt aufweist,
- wobei der Bogenabschnitt an seiner zur Anlage an dem Rohr vorgesehenen Innenseite mehrere Nuten oder Erhebungen aufweist, die zur Verdrehsicherung des Bügels mit in ihrer Form komplementären Erhebungen oder Nuten auf bzw. in der Außenschicht des Rohres zusammenwirken,
   vorgeschlagen.

Das erfindungsgemäße System umfaßt in ihrer Ausbildung aufeinander abgestimmte Rohre und Halteclipse, die im wesentlichen kraftschlüssig und vorzugsweise formschlüssig verdrehsicher miteinander verbunden werden können, wodurch es möglich ist, den Halteclips durch Niederdrücken mit der Schuhsohle in den Dämmungsuntergrund einzutreiben, ohne daß die Gefahr von unbeabsichtigten Verdrehungen des Halteclips beim Eintreiben in den Untergrund besteht. Die verdrehsichere Verbindung von Rohr und Halteclips wird erfindungsgemäß insbesondere durch in ihren Formen miteinander korrespondierenden Nuten oder Erhebungen an der Außenseite des Kunststoffrohres und an der Innenseite des Halteclips realisiert. Diese Erhebungen und Vertiefungen bzw. Nuten können insbesondere in Form einer Verzahnung ausgeführt sein. Die im auf das Rohr aufgesteckten Zustand des Halteclips aneinander anliegenden und zusammengreifenden Nuten oder Erhebungen (Verzahnungen) verhindern, daß der Halteclips sich relativ zum Rohr drehen kann. Die Anzahl der Nuten und Erhebungen ist derart gewählt, daß der Halteclips auch unter Berücksichtigung einer Torsion des Rohres stets in der jeweils erforderlichen Ausrichtung mit seinen zum Untergrund weisenden Schenkeln auf das Rohr aufgesteckt werden kann. Die Form und Dichte (Anzahl pro Längeneinheit) der Nuten oder Erhebungen ist prinzipiell beliebig. Insbesondere kommt eine im Querschnitt runde, rechteckige, schwalbenschwanzförmige, trapezförmige, dreieckige oder dergleichen Ausgestaltung in Frage.

Zur Erhöhung der Lagestabilität der Halteclipse am Rohr während des Eindrückens der Halteclipse in den Untergrund ist es zweckmäßig, wenn der Halteclips auf seiner den freien Enden der Schenkel gegenüberliegenden Oberseite eine Verbreiterung insbesondere in Rohrlängserstreckung aufweist, wobei entlang dieser Verbreiterung mindestens eine Nut bzw. Erhebung verläuft. Die Verbreiterung hat den Vorteil, daß die Berührungsfläche zwischen dem Halteclips und dem Rohr vergrößert ist, womit die Gefahr von Verkantungen oder Kippbewegungen des Halteclips beim Eindrücken in den Untergrund verringert ist.

Zur weiteren Stabilisierung der Lage des Halteclips ist es ferner zweckmäßig, wenn der Halteclips auch an seinen Seiten verbreiterte Bereiche aufweist, die ebenfalls von mindestens einer Nut oder Erhebung durchzogen sind. Durch die damit vergrößerte Zusammenwirkungsfläche zwischen den Nuten bzw. Erhebungen des Rohres und den Erhebungen bzw. Nuten des Halteclips wird ebenfalls ein Verkanten bzw. eine Kippbewegung des Halteclips weiter minimiert.

Zum Verlegen des erfindungsgemäßen Rohres mit Hilfe der erfindungsgemäßen Halteclipse wird das Rohr von dem auf dem Untergrund stehenden Monteur in der Hand gehalten und ein Halteclips radial auf das Rohr aufgesteckt. Das Rohr verläuft vor dem Monteur ausgehend von dem Rohrwickel S-förmig nach unten, wobei es durch entsprechenden Umfassen auf dem Dämmungsuntergrund abgelegt wird. Sobald dabei der zuvor aufgesteckte Halteclips mit seinen Schenkeln den Dämmungsuntergrund berührt, drückt der Monteur mit der Schuhsohle den Halteclips in den Dämmungsuntergrund hinein. Auf diese Weise wird das mit Halteclipsen bestückte Rohr über eine zunehmende Länge auf dem Dämmungsuntergrund abgelegt, wobei jeder Halteclips mit der Schuhsohle eingedrückt wird. Hierbei ist keinerlei Werkzeug und insbesondere keinerlei Spezialwerkzeuge wie Tacker oder dergleichen erforderlich. Ferner ist die Verlegetätigkeit verhältnismäßig bequem und vor allem schnell auszuführen, was sich ebenfalls positiv auswirkt.

Bei einer Varianten der Erfindung weist das Rohr eine Kunststoffaußenschicht auf, die derart beschaffen ist, daß sich in dieser eine Struktur verhaken kann, die ihrerseits an der Innenseite des zum Festlegen des Rohres auf eine Wärme- und/oder Trittschalldämmungsuntergrund vorgesehenen, im wesentlichen U-förmigen Halteclips ausgebildet ist. Durch das Verhaken der Struktur an der Innenseite des Halteclips in der Außenschicht des Rohres wird eine Verdrehsicherung erreicht. Insbesondere handelt es sich bei dem Material für die Außenschicht des Rohres um ein Kunststoffschaummaterial, während die Innenseite des Halteclips eine rauhe Oberfläche oder Hakenvorsprünge bzw. -elemente aufweist, die in das Schaummaterial eindringen und sich dort verkrallen können.

Das erfindungsgemäße System zum Festlegen eines Rohres auf einem Wärme- und/oder Trittschalldämmungsuntergrund umfaßt ein Rohr und mindestens einen Halteclips, die zwecks verdrehsicherer Verbindung kraftschlüssig, insbesondere reib-, stoff- und/oder formschlüssig miteinander verbunden werden können. Im Falle einer formschlüssigen Anbringung des Halteclips an dem Rohr, weisen diese an ihren einander berührenden Flächen Strukturen und Beschaffenheiten auf, die es erlauben, zwecks Verhakung beider zur verdrehsicheren Halterung des Halteclips am Rohr zusammen zu wirken. Insbesondere ist das Rohr an seiner Außenschicht mit mehreren Erhebungen versehen, während der Halteclips an seiner Innenseite mehrere korrespondieren Nuten aufweist. Der Halteclips weist abstehende Schenkel auf, mit denen er in den Untergrund hineingetrieben wird. Bei einer Reibschlußverbindung weisen der Bogenabschnitt des Halteclips und das Rohr eine Preßpassung auf, während im Fall einer stoffschlüssigen Verbindung Rohr und Halteclipse miteinander verschweißt, verklebt o. dgl. sind.

Nachfolgend wird anhand der Figuren ein Ausführungsbeispiel der Erfindung näher erläutert. Im einzelnen zeigen:
- Fig. 1: eine perspektivische Darstellung eines Rohres mit längslaufenden Erhebungen auf seiner Außenseite,
- Fign. 2 und 3: Vorder- und Seitenansichten eines Halteclips zum Aufstecken auf das Rohr gemäß Fig. 1,
- Fign. 4 und 5: den Arbeitsablauf für den Monteur beim Verlegen des mit den Halteclipsen gemäß Fign. 2 und 3 bestückten Rohres nach Fig. 1 und
- Fig. 6: in vergrößerter Darstellung die Situation kurz vor der Berührung des Dämmungsuntergrundes durch die Schenkel eines Halteclips und bei bereits geringfügig mit seinen Schenkeln in den Dämmungsuntergrund eingetriebenem Halteclips.

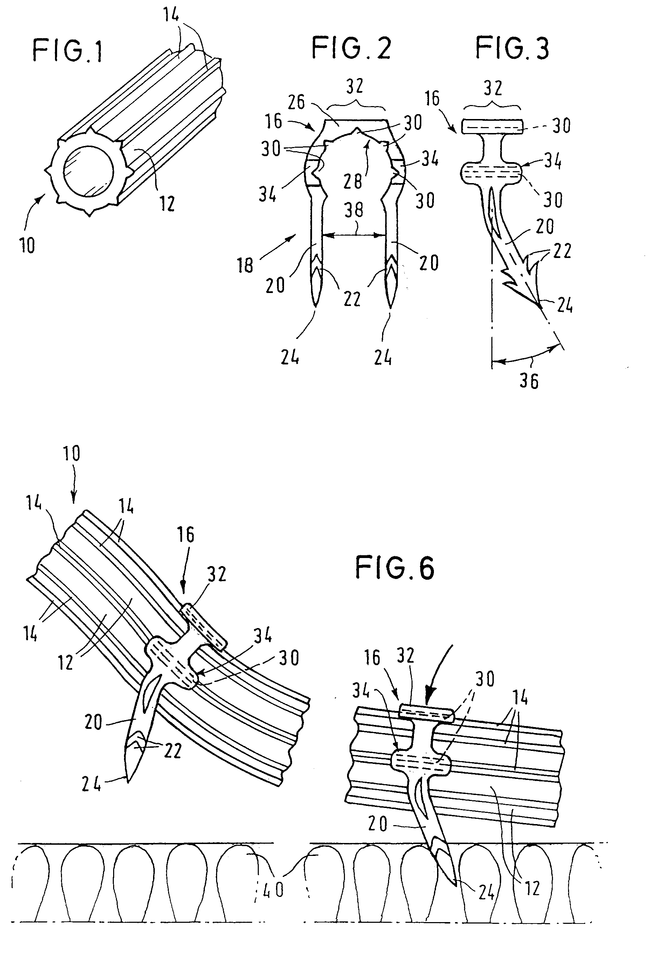

Das System zum Festlegen eines Rohres auf einem Wärme- und/oder Trittschalldämmungsuntergrund weist bei der hier zu beschreibenden bevorzugten Ausführungsform ein Kunststoffrohr 10 auf, dessen Außenschicht 12 acht gleichmäßig über den Umfang verteilt angeordnete längsverlaufende radial abstehende Erhebungen 14 aufweist. Die Erhebungen 14 sind in Form von abgerundeten radial abstehenden Rippen ausgebildet. Zum Befestigen eines derartigen Rohres 10, bei dem es sich im übrigen um ein Kunststoffrohr, ein Kunststoff-Metall-Verbundrohr mit Kunststoffaußenbeschichtung oder ein Metallrohr mit Kunststoffaußenbeschichtung handeln kann, werden bei dieser Ausführungsform die in den Fign. 2 und 3 gezeigten Halteclipse 16 eingesetzt. Der Halteclips 16 ist als im wesentlichen U-förmiger Bügel 18 ausgebildet, der zwei im wesentlichen parallel zueinander verlaufende Schenkel 20 mit Widerhaken 22 an ihren freien Enden 24 aufweist. Diese beiden Schenkel 20 sind über einen gebogenen Bogenabschnitt 26 miteinander verbunden. Die im aufgesteckten Zustand der Außenschicht 12 zugewandte Innenseite 28 des Bogenabschnitts 26 ist mit fünf Nuten 30 versehen, deren Querschnittsform gleich der Querschnittsform der rippenförmigen Radialerhebungen 14 des Rohres 10 ist. Der den freien Enden 24 der Schenkel 20 abgewandte oberste Scheitelbereich 32 des Bogenabschnitts 26 ist im wesentlich tellerartig verbreitert, was insbesondere anhand von Fig. 3 zu erkennen ist. Durch diese tellerartige Verbreiterung 32 steht der Bogenabschnitt 26 in diesem Bereich in Längserstreckung des Rohres 10 betrachtet über den übrigen Teil des Bügels 18 über. In diesem tellerartigen Bereich 32 befindet sich auf der Innenseite 28 des Bügels 18 eine der Nuten 30.

In Längserstreckung des Rohres betrachtet seitlich überstehende Bereiche finden sich bei dem Halteclips 16 auch an dessen Seiten. Wie Fig. 3 und insbesondere auch die Fig. 6 zeigt, sind diese Verbreiterungsbereiche 34 im Übergangsbereich zwischen dem gekrümmten Bogenabschnitt 26 und den Schenkeln 20 angeordnet, wobei innerhalb jedes Verbreiterungsbereichs 34 wiederum eine der Nuten 30 verläuft.

Wie ferner insbesondere anhand von Fig. 3 zu erkennen ist, sind die Schenkel 20 um einen bei 36 dargestellten Winkel zwischen 10° und 50° und insbesondere ca. 20° und 45° abgewinkelt. Diese Abwinklung der Schenkel ist derart ausgerichtet, daß die Schenkel 20 ihren gegenseitigen Abstand 38 (siehe Fig. 2) im wesentlichen beibehalten, die Schenkel 20 also in Folge ihrer Abwinklung leicht in Längserstreckung des Rohres 10 weisen.

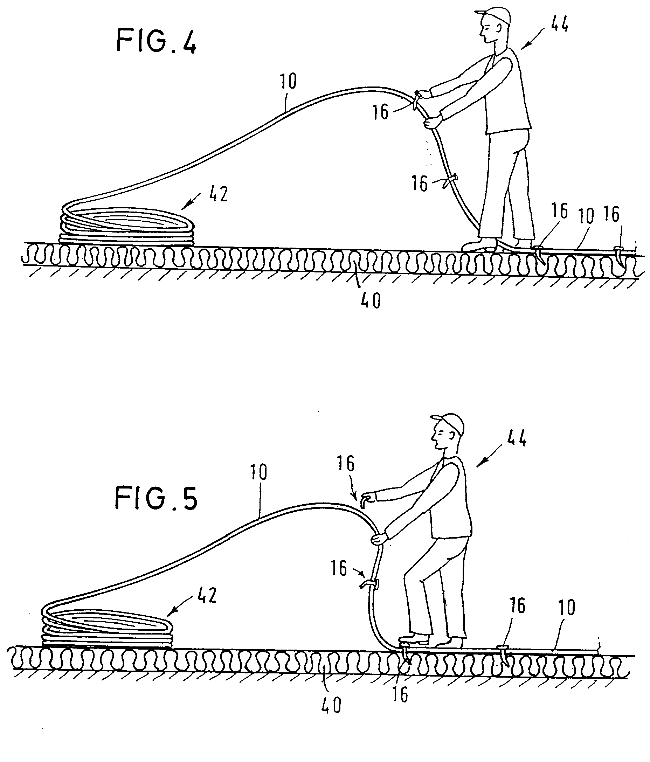

Die Abwinklung der Schenkel 20 und die verbreiterten Bereiche 32,34 der Halteclipse 16 wirken sich vorteilhaft auf die Lagestabilität beim Eindrücken in einen EPS-Dämmungsuntergrund aus. Die Fign. 4 und 5 zeigen den Arbeitsablauf beim Verlegen des mit den Halteclipsen 16 bestückten Rohres 10. Das Rohr 10 wird vom Wickel 42 kommend von dem Monteur 44 in der Hand gehalten, um von dort aus vor ihm S-förmig bis zum Dämmungsuntergrund 40 zu verlaufen. Der Monteur 44 drückt mit einer Hand einen Halteclips 16 auf das von ihm mit der anderen Hand gehaltene Rohr 10. Durch Umgreifen des so mit Halteclipsen 16 versehene Rohrstück zwischen der Hand des Monteurs und dem Dämmungsuntergrund 40 läßt sich das Rohr 10 auf dem Dämmungsuntergrund 40 ablegen, bis der Halteclips 16 sich unmittelbar oberhalb des Dämmungsuntergrundes 40 befindet. Diese Situation ist in vergrößertem Maßstab im linken Teil der Fig. 6 gezeigt. Zu erkennen ist, daß aufgrund der Abwinklung der Schenkel 20 diese im wesentlichen zum Dämmungsuntergrund 40 weisen. Beim-weiteren Ablegen des Rohres 10 gelangen die abgewinkelten Schenkel 20 unter leichter Schrägstellung und Ausrichtung zum bereits auf dem Untergrund 40 aufliegenden Rohrabschnitt weisend in den Dämmungsuntergrund 40 hinein (siehe rechten Teil der Fig. 6). Nun braucht der Monteur lediglich noch mit der Schuhsohle auf den verbreiterten Abschnitt 32 zu treten, um den Halteclips 16 gänzlich in den Dämmungsuntergrund 40 zu drücken. Während dieses Vorganges ist der Halteclips 16 lagestabil am Rohr 10 gelagert, da er in Folge seiner Verbreiterungen 32,34 über eine vergleichsweise große Verhakungsfläche mit dem Rohr 10 verfügt. Auf diese Weise ist es gelungen, die Halteclipse 16 in den Dämmungsuntergrund 40 ohne Verwendung von Spezialwerkzeugen hineinzutreiben.

## Patentansprüche

1. Rohr, insbesondere Kunststoffrohr, Kunststoff-Metall-Verbundrohr oder kunststoffbeschichtetes Metallrohr mit
- einer Kunststoffaußenschicht (12) und
- mehreren in Erstreckung des Rohres (10) verlaufenden Nuten oder Erhebungen (14) in bzw. auf der Außenschicht (12) zum Zusammenwirken mit in ihrer Form komplementären Erhebungen oder Nuten (30) an der Innenseite (28) eines zum Festlegen des Rohres (10) auf einem Wärme- und/oder Trittschalldämmungsuntergrund (40) vorgesehenen, im wesentlichen U-förmigen Halteclips, und zwar zwecks Verdrehsicherung desselben.

2. Rohr nach Anspruch 1, dadurch gekennzeichnet, daß mindestens vier Nuten oder Erhebungen (14) in bzw. auf der Außenschicht (12) vorgesehen sind.

3. Rohr nach Anspruch 1 oder 2, dadurch gekennzeichnet, daß die Nuten oder Erhebungen (14) in Umfangsrichtung des Rohres (10) gleichmäßig verteilt in bzw. auf der Außenschicht (12) angeordnet sind.

4. Rohr, insbesondere Kunststoffrohr, Kunststoff-Metall-Verbundrohr oder kunststoffbeschichtetes Metallrohr mit einer Kunststoffaußenschicht, die derart beschaffen ist, daß sich eine Struktur, die an der Innenseite eines zum Festlegen des Rohres auf einen Wärme- und/oder Trittschalldämmungsuntergrund vorgesehenen, im wesentlichen U-förmigen Halteclips ausgebildet ist, mit der Kunststoffaußenschicht zwecks Verdrehsicherung des Halteclips verhakt.

5. Rohr nach Anspruch 4, dadurch gekennzeichnet, daß die Kunststoffaußenschicht zumindest einen weichen Außenbereich aus insbesondere einem Schaummaterial aufweist, in den der Halteclips mit seiner rauhen Innenseitenstruktur und/oder mit Haltevorsprüngen und/oder -elementen an seiner Innenseite eindringt und sich verkrallt.

6. Halteclips zum Festlegen eines Rohres, insbesondere nach einem der vorherigen Ansprüche auf einer Wärme- und/oder Trittschalldämmungsunterlagen, mit
- einem im wesentlichen U-förmig gebogenen Bügel (18), der zwei Schenkel (20) und einen dem Außendurchmesser des Rohres (10) entsprechend gekrümmten Bogenabschnitt (26) aufweist,
- wobei der Bogenabschnitt (26) an seiner zur Anlage an dem Rohr (10) vorgesehenen Innenseite (28) mehrere Nuten (30) oder Erhebungen aufweist, die zur Verdrehsicherung des Bügels (18) mit in ihrer Form komplementären Erhebungen (14) oder Nuten auf bzw. in der Außenschicht (12) des Rohres (10) zusammenwirken.

7. Halteclips nach Anspruch 6, dadurch gekennzeichnet, daß der Bogenabschnitt (26) des Bügels (18) mindestens drei Nuten (30) oder Erhebungen aufweist.

8. Halteclips nach Anspruch 6 oder 7, dadurch gekennzeichnet, daß die Nuten (30) oder Erhebungen gleichmäßig verteilt entlang der Innenseite (28) des Bogenabschnitts (26) des Bügels (18) angeordnet sind.

9. Halteclips nach einem der Ansprüche 6 bis 8, dadurch gekennzeichnet, daß der Bügel (18) im Bereich seines Scheitelpunktes, d. h. in Höhe zumindest der Mitte zwischen den beiden Schenkeln verbreitert ist und daß in diesem verbreiterten Bereich (32) mindestens eine Nut (30) oder Erhebung angeordnet ist.

10. Halteclips nach einem der Ansprüche 6 bis 9, dadurch gekennzeichnet, daß der Bügel (18) in den Übergangsbereichen zwischen dem Bogenabschnitt (26) und den Schenkeln (20) jeweils verbreitert ist und daß in jedem dieser verbreiterten Bereiche (34) mindestens eine Nut (30) oder Erhebung angeordnet ist.

11. Halteclips nach einem der Ansprüche 6 bis 10, dadurch gekennzeichnet, daß die Krümmung des Bügels (18) derart gewählt ist, daß der Bügel (18) im auf dem Rohr aufgesteckten Zustand leicht aufgeweitet ist und somit mit einer Spannung an dem Rohr (10) anliegt.

12. Halteclips nach einem der Ansprüche 6 bis 11, dadurch gekennzeichnet, daß die Schenkel (20) im wesentlichen unter Beibehaltung ihres gegenseitigen Abstandes abgewinkelt sind.

13. Halteclips nach Anspruch 12, dadurch gekennzeichnet, daß die Schenkel (20) unter einem Winkel von etwa 10° bis 50°, vorzugsweise von etwa 20° bis 45° abgewinkelt sind.

14. Halteclips zum Festlegen eines Rohres, insbesondere nach einem der vorherigen Ansprüche auf einer Wärme- und/oder Trittschalldämmungsunterlagen, mit
- einem im wesentlichen U-förmig gebogenen Bügel (18), der zwei Schenkel (20) und einen dem Außendurchmesser des Rohres (10) entsprechend gekrümmten Bogenabschnitt (26) aufweist,
- wobei der Bogenabschnitt (26) an seiner zur Anlage an dem Rohr (10) vorgesehenen Innenseite (28) eine Struktur aufweist, die sich zur Verdrehsicherung des Bügels (18) mit einer Kunststoffaußenschicht (12) des Rohres (10) verhakt.

15. Halteclips nach Anspruch 14, dadurch gekennzeichnet, daß die Struktur der Innenseite des Bogenabschnitts des Bügels eine rauhe Oberfläche und/oder eine Oberfläche mit Verhakungsvorsprüngen und/oder -elementen zum Eindringen in den weichen Außenbereich der Kunststoffaußenschicht des Rohres aufweist.

16. System zum Festlegen eines Rohres auf einem Wärme- und/oder Trittschalldämmungsuntergrund mit
- einem Rohr (10) mit einer Kunststoffaußenschicht (12) und
- mindestens einem Halteclips (16) mit einem im wesentlichen U-förmig gebogenen Bügel (18), der zwei Schenkel (20) und einen gekrümmten Bogenabschnitt (26) aufweist,
- wobei der mindestens eine Halteclips (16) und das Rohr (10) derart beschaffen und ausgebildet sind, daß der mindestens eine Halteclips (16) zwecks verdrehsicherer Anbringung an dem Rohr (10) mit diesem kraftschlüssig verbindbar ist.

17. System nach Anspruch 16, dadurch gekennzeichnet, daß der mindestens eine Halteclips (16) mit dem Rohr reibschlüssig und/oder stoffschlüssig verbindbar ist.

18. System nach Anspruch 16, dadurch gekennzeichnet, daß der mindestens eine Halteclips (16) mit dem Rohr formschlüssig verbindbar ist.

19. System nach Anspruch 18, gekennzeichnet durch
- ein Rohr (10) nach einem der Ansprüche 1 bis 5 und
- mindestens einen Halteclips (16) nach einem der Ansprüche 6 bis 15.
